# EUROPEAN PATENT APPLICATION

(11) **EP 4 236 041 A1**
(43) Date of publication of application: **30.08.2023**
(21) Application number: 21882623.8
(22) Date of filing: 08.10.2021
(51) Int. Cl.: H02K 5/16, H02K 15/16

(54) **ROTARY ELECTRICAL MACHINE**

(30) Priority: 23.10.2020 JP 2020177883
(71) Applicant: KABUSHIKI KAISHA TOSHIBA, Minato-ku Tokyo 105-0023 (JP); Toshiba Infrastructure Systems & Solutions Corporation, Kawasaki-shi, Kanagawa 212-0013 (JP)
(72) Inventor: KATO, Shuichi, Kawasaki-shi, Kanagawa 212-0013 (JP); OKABAYASHI, Masahiro, Kawasaki-shi, Kanagawa 212-0013 (JP); SAWAKAMI, Tomoki, Kawasaki-shi, Kanagawa 212-0013 (JP); KUMAGAI, Io, Kawasaki-shi, Kanagawa 212-0013 (JP)
(74) Representative: AWA Sweden AB
(86) International application number: PCT/JP2021/037280
(87) International publication number: WO 2022/085482

(57) **Abstract**

According to one embodiment, a rotary electrical machine includes a cylindrical housing 12 including a closed end provided with a bearing and an open end which is opened and connectable to another device, a rotor 30 including a rotating shaft 32 supported rotatably around a center axis line and a rotor core 34 fixed to the rotating shaft, the rotating shaft including one end 32a supported by the bearing, an other end 32b located close to the open end, and a flange portion 40 provided at the other end, and a stator 20. The flange portion includes a peripheral surface 41a opposed to an end portion placed alongside the opening end of the housing with a gap in a radial direction of the rotating shaft. The housing includes a plurality of installation sections 60a, 60b separated from each other in a circumferential direction around the center axis line and formed at the end portion alongside the opening end, and each of the installation sections includes a seat surface 61 formed at the end portion and separated from the peripheral surface of the flange portion at a predetermined distance in the radial direction, a through hole formed at the end portion through the seat surface and opened toward the peripheral surface of the flange portion, and a threaded hole provided in the seat surface close to the through hole.

## Description

### Technical Field

Embodiments of the present invention relates to a rotary electrical machine.

### Background Art

Induction motors, wound generators and permanent magnet rotary electrical machine are adopted as rotary electrical machines for use in railroad vehicles.

A rotary electrical machine with a cantilevered support structure is proposed as a main motor or a generator to be mounted on railroad vehicles, in which only the non-driving-side end of the rotating shaft of the rotor is supported by bearings and the driving-side end connected to other equipment is not supported by bearings.

In the above rotary electrical machine with a cantilevered support structure, the rotor is brought into a cantilevered state until it is directly connected to another device. In addition, the rotor is brought into a cantilevered state even during maintenance because the connecting portion of the rotary electrical machine needs to be separated from another device during the maintenance of the rotary electrical machine. If the rotor is in a cantilevered state, it is feared that the rotor may move to be in contact with a stator. A support structure is thus required to restrain the movement of the rotor during direct connection work and maintenance. As such a support structure, a structure having a support member that supports the driving-side end of the rotating shaft from below is being studied.

### Citation List

### Patent Literatures

Patent Literature 1: JP 2000-350416 A
Patent Literature 2: JP 2003-134748 A
Patent Literature 3: JP 2015-100194 A

### Summary of Invention

### Technical Problem

Since the foregoing support structure only supports the shaft of the rotor from below, it fails to restrain the vertical movement of the rotor completely. If the rotary electrical machine is of a permanent magnet type, magnetic flux always exists in the rotor to generate magnetic attraction between the rotor and the stator. For this reason, the above support structure is insufficient to fix the rotor; thus, it is feared that the rotor may be moved by the magnetic attraction and may be placed into contact with the stator.

The present invention has been made in view of the above and aims to provide a rotary electrical machine capable of preventing a rotor from being displaced during direct work with other devices and during maintenance.

### Solution to Problem

According to an embodiment, A rotary electrical machine comprising: a cylindrical housing including a closed end which is closed by an end plate provided with a bearing and is located at one end in an axial direction and an open end which is located at the other end in the axial direction and is connectable to another device; a rotor comprising a rotating shaft supported rotatably around a center axis line and a rotor core fixed to the rotating shaft, the rotating shaft including one end supported by the bearing, an other end located close to the open end, and a flange portion provided at the other end and connectable to the another device; and a stator fixed to the housing and placed around the rotor core with a gap therebetween. The flange portion includes a peripheral surface opposed to an end portion placed alongside the opening end of the housing with a gap in a radial direction of the rotating shaft; and the housing includes a plurality of installation sections separated from each other in a circumferential direction around the center axis line and formed at the end portion alongside the opening end, and each of the installation sections includes a seat surface formed at the end portion and separated from the peripheral surface of the flange portion at a predetermined distance in the radial direction, a through hole formed at the end portion through the seat surface and opened toward the peripheral surface of the flange portion, and a threaded hole provided in the seat surface close to the through hole.

### Brief Description of Drawings

FIG. 1 is an external perspective view of a rotary electrical machine according to a first embodiment.
FIG. 2 is a schematic longitudinal sectional view of the rotary electrical machine.
FIG. 3 is a side view showing an open-end side of the rotary electrical machine.
FIG. 4 is a perspective view showing support members of the rotary electrical machine.
FIG. 5 is a schematic longitudinal sectional view of a rotary electrical machine according to a second embodiment.
FIG. 6 is a side view showing an open-end side of the rotary electrical machine according to the second embodiment.
FIG. 7 is a side view showing an open-end side of a rotary electrical machine according to a third embodiment.
FIG. 8 is a schematic longitudinal sectional view of a rotary electrical machine according to a fourth embodiment.
FIG. 9 is a side view showing a closed-end side of the rotary electrical machine according to the fourth embodiment.
FIG. 10 is a schematic longitudinal section view of a rotary electrical machine according to a fifth embodiment.
FIG. 11 is a side view showing an open-end side of the rotary electrical machine according to the fifth embodiment.
FIG. 12 is a side view showing an open-end side of a rotary electrical machine according to a sixth embodiment.

### Mode for Carrying Out the Invention

Embodiments of the present invention will be described below with reference to the accompanying drawings. Note that throughout the embodiments, like components are given like reference numerals or signs and their overlapping descriptions are omitted. The drawings are schematic diagrams to describe and understand the embodiments easily and the components shown in the drawings may be different in shape, dimension, ratio or the like from the actual ones. These can be changed appropriately in consideration of the following descriptions and publicly-known art.

### (First Embodiment)

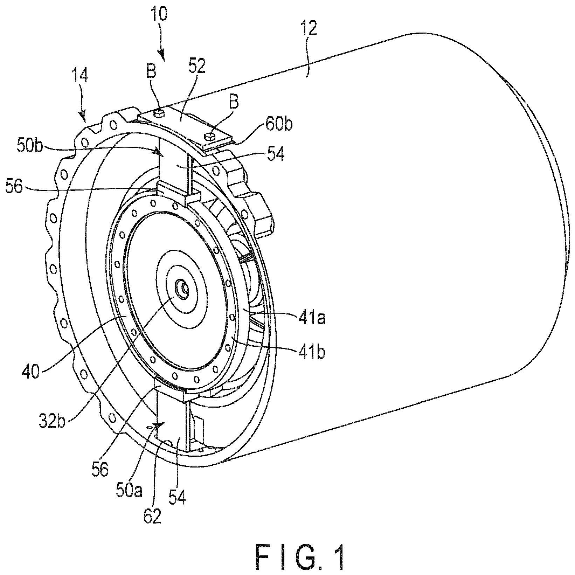

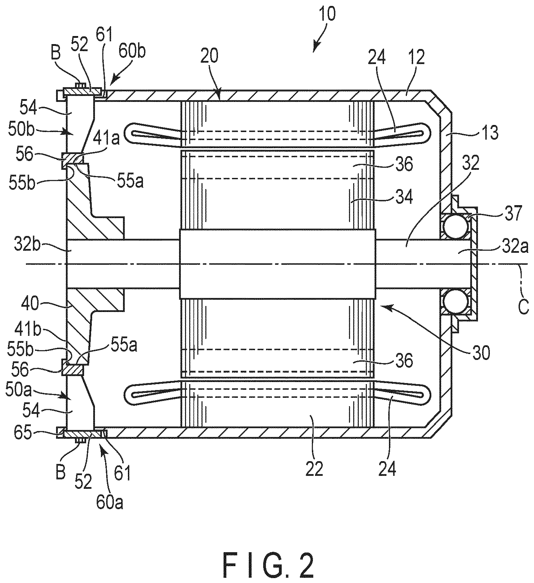

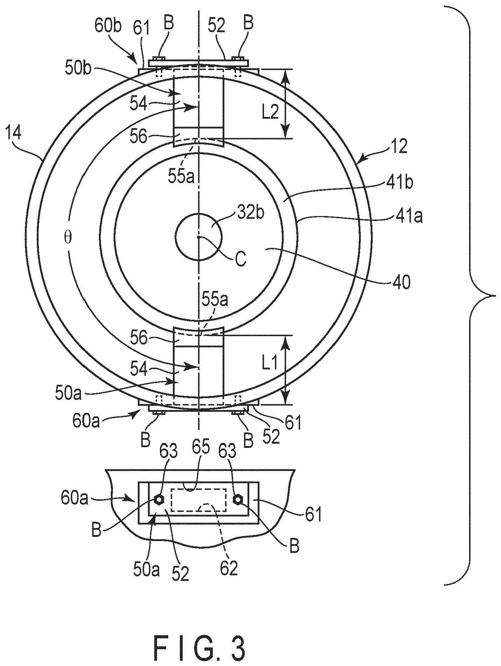

FIG. 1 is an external perspective view of a rotary electrical machine according to a first embodiment. FIG. 2 is a schematic longitudinal sectional view of the rotary electrical machine. FIG. 3 is a side view showing an open-end side of the rotary electrical machine.

As shown in FIGS. 1 and 2, a rotary electrical machine 10 includes a cylindrical housing (case) 12 having a closed end that is closed by an end plate 13 at one end in the axial direction and an open end that is located at the other end in the axial direction. An open-side end portion of the housing 12 constitutes a connecting-end portion 14 that is connectable to another device.

The rotary electrical machine 10 includes a stator 20 housed in the housing 12 and a rotor 30 supported rotatably around the center axis line C of the housing 12. The stator 20 includes an annular stator core 22 and a stator coil 24 wound around the stator core 22. The stator core 22 is fixed to the inner surface of the housing 12 and is placed coaxially with the center axis line C of the housing 12. The stator core 22 is configured by laminating a large number of annular metal plates that are made of magnetic materials, such as silicon steel plates. A plurality of slots each extending in an axial direction are formed on the inner periphery of the stator core 22. The stator coil 24 is attached to the stator core 22 while embedded in the slots. The coil end of the stator coil 24 overhangs axially from both end faces of the stator core 22.

The rotor 30 includes a rotating shaft 32, a nearly columnar rotor core 34 attached to the rotating shaft 32, and a plurality of permanent magnets 36 embedded in the rotor core 34. The rotating shaft 32 is placed in the housing 12 coaxially with the center axis line C, and its one-end portion (non-output-side end) 32a in the axial direction is rotatably supported by a bearing 37 provided on the end plate 13. The other-end portion (output-side end) 32b of the rotating shaft 32 in the axial direction is not supported by the bearing, and the rotating shaft 32 is cantilevered.

The rotor core 34 is configured by laminating a large number of annular metal plates that are made of magnetic materials, such as silicon steel plates, and is formed in an almost cylindrical shape. The rotor core 34 is fixed almost at the central part of the rotating shaft 32 in its axial direction, and is placed at the interior of the stator core 22 coaxially with the center axis line C. The outer peripheral surface of the rotor core 34 is opposed to the inner peripheral surface of the stator core 22 with a gap (air gap) therebetween. The axial length of the rotor core 34 is almost equal to that of the stator core 22, and the rotor core 34 is opposed to the stator core 22 throughout its length.

At the output-side end 32b of the rotating shaft 32, a disk-shaped flange portion is provided to couple the rotating shaft 32 with other devices (an engine, a drive, a coupling, etc.) and transmit the force of rotation. In the present embodiment, the flange portion is configured by attaching a disk-shaped coupling member 40 to the rotating shaft 32. The coupling member 40 has an outer peripheral surface 41a that is located coaxially with the center axis line C and an annular bonding surface 41b that is orthogonal to the outer peripheral surface 41a.

In one example, the coupling member 40 is formed with a diameter that is equal to or slightly smaller than that of the rotor core 34. The outer peripheral surface 41a of the coupling member 40 is opposed to and spaced from the inner surface of the connecting-end portion 14 of the housing 12. In addition, the bonding surface 41b of the coupling member 40 is placed at a position slightly shifted toward the inside of the housing 12 from the end surface of the connecting-end portion 14.

If the coupling member 40 is not coupled with another device, the rotating shaft 32 is brought into a cantilevered state in which its one end 32a is only supported by the bearing 37, and the rotor 30 including the rotating shaft 32 and rotor core 34 is not positioned. Therefore, a plurality of support members for supporting and positioning the coupling member 40, such as two support members 50a and 50b, are attached to the housing 12 at the time of installation of a transport protection device or at the time of detachment of equipment from the vehicle body.

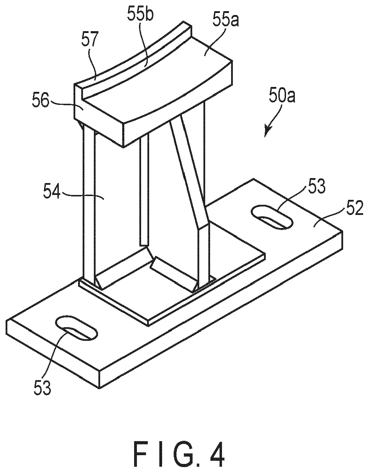

FIG. 4 is a perspective view showing an example of the support members of the rotary electrical machine. Since the support members 50a and 50b have a common configuration, the configuration of the support member 50a will be described. As shown in FIG. 4, the support member 50a includes a rectangular plate-like base plate (base portion) 52, a support leg (leg portion) 54 standing almost vertically on the base plate 52 and an almost rectangular plate-like abutting member (abutting portion) 56 provided at the extended end of the support leg 54, and these portions are formed integrally by, for example, metallic materials or configured by bonding a plurality of members to each other by welding. The base plate 52 has a plurality of (e.g., two) through holes 53, and each of the through holes 53 is formed in its corresponding side of the support leg 54. The abutting member 56 includes a flange 57 having a first abutting surface 55a capable of abutting on the outer peripheral surface 41a of the coupling member 40 and a second abutting surface 55b extending perpendicular to the first abutting surface 55a and capable of abutting on the bonding surface 41b of the coupling member 40. The first abutting surface 55a is formed on an arc-shaped abutting surface that is curved with a curvature similar to that of the outer peripheral surface 41a.

As shown in FIGS. 1, 2 and 3, installation sections 60a and 60b for installing the support members 50a and 50b are formed at the connecting-end portion 14 14 of the housing 12. The installation sections 60a and 60b are formed at two points on the outer surface of the connecting-end portion 14, one of the points being located vertically below the coupling member 40 and the other being located vertically above the coupling member 40. Each of the installation sections 60a and 60b has a flat installation surface (seat surface) 61 formed on the outer surface of the connecting-end portion 14, a rectangular through hole 62, for example, formed in the connecting-end portion 14 through the center of the seat surface 61 and opened toward the outer peripheral surface 41a of the coupling member 40, and a plurality of (for example, two) threaded holes 63 provided in the seat surface 61 on both sides of the through hole 62. The seat surface 61 is orthogonal to the housing 12 in its radial direction. That is, the seat surface 61 extends in the tangential direction of a circle centered on the center axis line C.

When viewed circumferentially around the center axis line C, the installation sections 60b and 60a are spaced from each other by angle θ. The angle θ can be set to about 90 to 180 degrees in accordance with the number of installation sections. In the present embodiment, two installation sections are provided, and the angle theta is set at 180 degrees. The installation section 60a is provided below in the vertical direction with respect to the center axis line C and the coupling member 40, and the installation section 60b is provided above in the vertical direction and in a position opposite to the installation section 60a with respect to the center axis line C. The through hole 62 provided in each of the installation sections 60a and 60b is opened toward the center axis line C and formed such that its center axis is orthogonal to the center axis line C.

The support member 50a is located below the center axis line C and below the coupling member 40 in the vertical direction. The support member 50b is located above the center axis line C and above the coupling member 40.

The lower support member 50a is inserted from below the housing 12 into the through hole 62 of the lower installation section 60a. The base plate 52 is bolted to the housing 12 by two bolts B in contact with the seat surface 61. The first abutting surface 55a of the abutting member 56 abuts on the outer peripheral surface 41a of the coupling member 40 to support the coupling member 40 from below. The second abutting surface 55b abuts on the bonding surface 41b of the coupling member 40 to position the coupling member 40 in its axial direction.

The lower support member 50a needs to manage its axial position relative to the coupling member 40. Thus, the installation section 60a has a locking surface 65 that stands up perpendicular to the seat surface 61 to position the base plate 51 and the support member 50a in the axial direction by abutting one side edge of the base plate 51 on the locking surface 65. In this case, in order to make the position of the base plate 51 adjustable, the through hole 53 of the base plate 51 through which the bolt B is inserted is formed to have a diameter slightly larger than that of the bolt B or is formed into a hole that is elongated in the axial direction.

The upper support member 50b is inserted from above the housing 12 into the through hole 62 of the upper installation section 60b. The base plate 52 is bolted to the housing 12 by two bolts B opposite to the seat surface 61 with a gap. The first abutting surface 55a of the abutting member 56 abuts on the outer peripheral surface 41a of the coupling member 40 to press the coupling member 40 from above. The second abutting surface 55b abuts on the bonding surface 41b of the coupling member 40 to position the coupling member 40 in its axial direction.

Note that the distance (prescribed distance) L2 from the seat surface 61 of the above installation section 60b to the outer peripheral surface 41a of the coupling member 40 is shorter (L2 < L1) than the distance (predetermined distance) L1 from the seat surface 61 of the lower installation section 60a to the outer peripheral surface 41a of the coupling member 40. On the other hand, in the support members 50a and 50b, the length (shortest distance) from the base plate 52 to the first abutting surface 55a is set to a common length, e.g., L1. As described above, therefore, the upper support member 50b causes a gap (for example, about several millimeters) between the base plate 52 and the seat surface 61 with the first abutting surface 55a in contact with the outer peripheral surface 41a of the coupling member 40. If the bolt B is tightened in this state, the abutting member 56 of the upper support member 50b presses the coupling member 40 against the abutting member 56 of the lower support member 50b. Accordingly, the radial position of the coupling member 40 is set precisely with reference to the lower support member 50a.

In the support structure of the foregoing configuration, first, the lower support member 50a is set in and screwed to the housing 12, and the first and second abutting surfaces 55a and 55b of the abutting member 56 are brought into face contact with the coupling member 40 to support the coupling member 40 from below. The positive position of the coupling member 40 in the height direction (radial direction) is determined by the first abutting surface 55a of the support member 50a, and the positive position of the coupling member 40 in the axial direction is determined by the second abutting surface 55b. The upper support member 50b is then set in the housing 12 and coupled to the housing 12 by the bolts B. Since the bolts B are screwed, an axial force is applied to the coupling member 40 from the support member 50b, and the coupling member 40 is fixed in the vertical (radial) direction by pressing the coupling member 40 against the support member 50a by the first abutting surface 55a of the abutting member 56.

According to the rotary electrical machine 10 according to the first embodiment configured as described above, the coupling member 40 and the output-side end 32b of the rotating shaft 32 of the cantilevered rotor 30 can be supported by the supporting members 50a and 50b, and the coupling member 40 can be fixed in the positive positions of the radial and axial positions. Even though the coupling member 40 is decoupled from other devices, the positions of the rotating shaft 32 and rotor 30 are not displaced, that is, they are not shifted, thus allowing transportation to be provided by the rotary electrical machine itself. It is therefore possible to obtain a rotary electrical machine capable of stably holding the rotor and preventing the rotor from being shifted in position during work of direct connection with other devices, maintenance, transportation and the like.

Note that the support members 50a and 50b are detachably attached to the housing 12 by the bolts B. Therefore, after the coupling member 40 and housing 12 are coupled to other devices, the support members 50a and 50b can easily be removed by loosening the bolts B and pulling the support members 50a and 50b from outside the housing 12.

Next is a description of a rotary electrical machine according to each of other embodiments of the present invention. In the other embodiments described below, the same components and the same structural members as those in the foregoing first embodiment are denoted by the same reference symbols as those in the first embodiment, and their descriptions will be omitted or simplified, focusing on the components different from those in the first embodiment.

### (Second Embodiment)

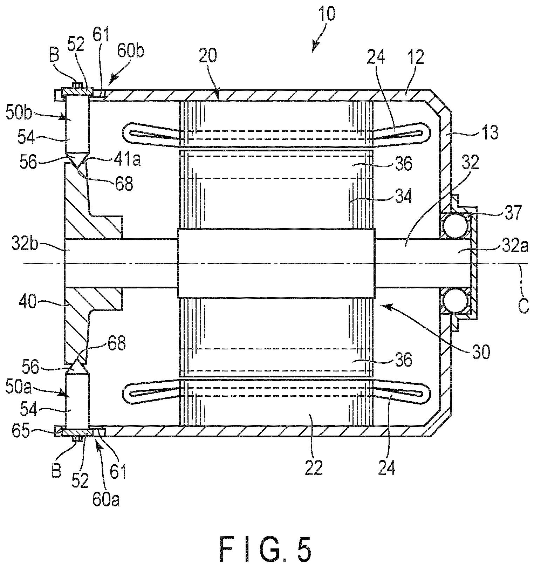

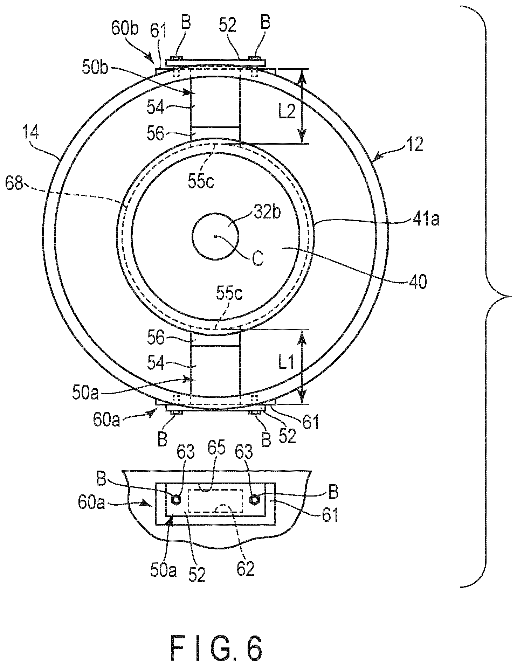

FIG. 5 is a schematic longitudinal sectional view of a rotary electrical machine according to a second embodiment. FIG. 6 is a side view showing an open-end side of the rotary electrical machine according to the second embodiment.

As shown in the figure, according to the second embodiment, an engaging groove 68 having a V-shaped section, for example, is formed in the outer peripheral surface 41a of the coupling member 40. The engaging groove 68 extends over the entire circumference of the outer peripheral surface 41a and is formed in an annular shape that is coaxial with the center axis line C.

The abutting members 56 of the support members 50a and 50b are each formed in a wedge shape that can be engaged with the engaging groove 68. That is, the abutting members 56 each have a wedge-shaped distal end that tapers from the support leg 54 side toward the center axis line C. The distal-end edge of each of the abutting members 56 (the top portion of the wedge) is formed as a curved arc-shaped distal-end edge 55c that is curved with the same curvature as that of the engaging groove 68.

The lower support member 50a is inserted into the through hole 62 of the lower installation section 60a from below the housing 12, and the base plate 52 is bolted to the housing 12 by two bolts B in contact with the seat surface 61. The wedge-shaped distal end of the abutting member 56 fits into the engaging groove 68 of the coupling member 40 and abuts on the V-shaped bottom surface of the engaging groove 68, and the arc-shaped distal-end edge 55c abuts on the bottom edge of the engaging groove 68. Thus, the support member 50a supports the coupling member 40 from below. The positive position of the coupling member 40 in the height direction (radial direction) is determined by controlling the engaging groove 68 and the lower support member 50a in the height direction.

The upper support member 50b is inserted into the through hole 62 of the upper installation section 60b from above the housing 12, and the base plate 52 is bolted to the housing 12 by two bolts B opposite to the seat surface 61 with a gap. The wedge-shaped distal end of the abutting member 56 is engaged in the engaging groove 68 of the coupling member 40 to press both bottom surfaces of the engaging groove 68 toward the center axis line C. In addition, the arc-shaped distal-end edge 55c of the abutting member 56 abuts on the bottom edge of the engaging groove 68. Thus, the axial position of the coupling member 40 is set in the positive position by fitting the wedge-shaped abutting member 56 of each of the upper and lower support members 50a and 50b into the engaging groove 68 having a V-shaped section.

The shortest length (predetermined distance) L2 from the seat surface 61 of the upper installation section 60b to the bottom of the engaging groove 68 of the coupling member 40 is formed shorter (L2 < L1) than the shortest length (predetermined distance) L1 from the seat surface 61 of the lower installation section 60a to the bottom of the engaging groove 68 of the coupling member 40. On the other hand, in the support members 50a and 50b, the length from the base plate 52 to the distal-end edge 55c is set to a common length, e.g., L1. Therefore, when the upper support member 50b is set in the housing 12, an axial force is applied from the support member 50b to the coupling member 40 by screwing the bolts B, and the vertical (radial) position of the coupling member 40 is fixed by pressing the coupling member 40 to the first support member 50a.

In the second embodiment, the other configuration of the rotary electrical machine 10 is the same as that of the rotary electrical machine according to the first embodiment described above.

According to the rotary electrical machine 10 according to the second embodiment configured as described above, even though a flange or the like for defining the axial position cannot be provided on the abutting members, the vertical (radial) position and the axial position of the coupling member 40 can rigorously be determined by using the engaging groove 68 and the wedge-shaped abutting members 56 of the support members 50a and 50b. Even though the coupling to other devices is released, the position of the rotating shaft is not displaced, thus allowing transportation to be provided by the electric motor itself.

From the above, according to the second embodiment, even though the coupling member 40 is decoupled from other devices, the positions of the rotating shaft 32 and rotor 30 are not displaced, that is, they are not shifted, thus allowing transportation to be provided by the rotary electrical machine itself. It is therefore possible to obtain a rotary electrical machine capable of stably holding the rotor and preventing the rotor from being shifted in position during work of direct connection with other devices, maintenance, transportation and the like.

### (Third Embodiment)

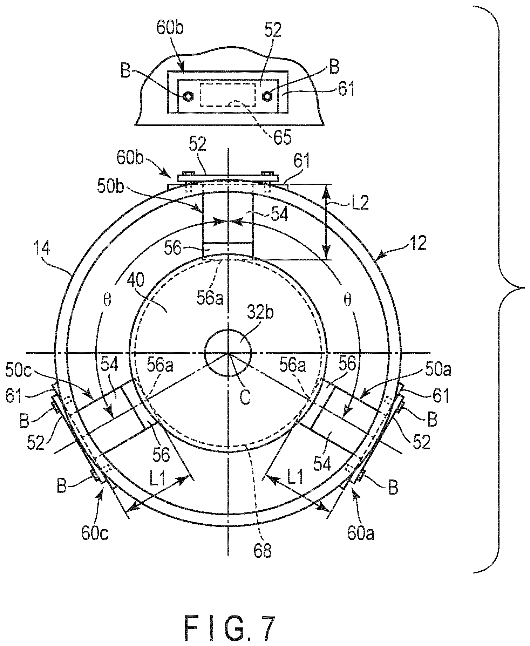

FIG. 7 is a side view showing an open-end side of a rotary electrical machine according to a third embodiment.

As shown, according to the third embodiment, the rotary electrical machine 10 includes three support members 50a, 50b and 50c. Three installation sections 60a, 60b and 60c are provided on the outer peripheral surface of the connecting-end portion 14. The installation section 60b is provided at the upper part in the vertical direction, and the installation sections 60a and 60c are each provided in a position separated circumferentially from the installation section 60b at angles θ (about 120 degrees). The support members 50a, 50b and 50c are set in the installation sections 60a, 60b, and 60c, respectively, and are arranged circumferentially (approximately 120 degrees) at regular intervals.

As in the second embodiment, an engaging groove 68 having a V-shaped section is formed in the outer peripheral surface 41a of the coupling member 40. The abutting members 56 of the support members 50a, 50b and 50c are formed in a wedge shape, that is, the abutting members 56 are each formed in a wedge shape tapering from the side of the support leg 54 toward the center axis line C, and is fit in the engaging groove 68. In the third embodiment, the distal-end edge (the top of the wedge) of each of the abutting members 56 constitutes not an arc but straight distal-end edge 55c. The distal-end edge 55c extends in a direction tangent to the bottom edge of the engaging groove 68.

The shortest length (predetermined distance) L2 from the seat surface 61 of the upper installation section 60b to the bottom of the engaging groove 68 of the coupling member 40 is shorter (L2 < L1) than the shortest length (predetermined distance) L1 from the seat surface 61 of each of the lower installation sections 60a and 60c to the bottom of the engaging groove 68 of the coupling member 40. On the other hand, in the support members 50a, 50b and 50c, the length from the base plate 52 to the distal-end edge 55c is set to a common length, e.g., L1.

In the above support structure, for example, before the installation of a transport protection device of the rotary electrical machine 10 or at the time of detachment of equipment from the vehicle body, the lower two support members 50a and 50c are first set in the housing 12 and the abutting members 56 are fit into the engaging groove 68. The height-direction (radial-direction) position of the coupling member 40 is determined by supporting the coupling member 40 from below by the two support members 50a and 50c and also by controlling the positioning of the support members 50a and 50c in the height and axial directions. Then, the upper support member 50b is set in the housing 12, and the abutting member 56 of the support member 50b is fit into the engaging groove 68. If the upper and lower three abutting members 56 are fit into the engaging groove 68, the position of the coupling member 40 in the axial direction is set in the positive position.

In addition, the shortest length (predetermined distance) L2 from the seat surface 61 of the upper installation part 60b to the bottom of the engaging groove 68 of the coupling member 40 is set to be shorter (L2 < L1) than the shortest length (predetermined distance) L1 from the seat surface 61 of the lower two installation sections 60a and 60c to the bottom of the engaging groove 68 of the coupling member 40. If, therefore, the lower support members 50a and 50c are attached and then the upper support member 50b is attached, the axial force acts on the coupling member 40 from the support member 50b to fix the coupling member 40 in its vertical (radial) direction.

According to the third embodiment configured as described above, the coupling member 40 is fixed at three points to allow the coupling member 40 to be reliably positioned in the axial direction and allow the rotor to be firmly fixed and supported. This makes it possible to obtain a rotary electrical machine capable of capable of stably holding the rotor and preventing the rotor from being shifted in position during work of direct connection with other devices, maintenance, transportation and the like.

### (Fourth Embodiment)

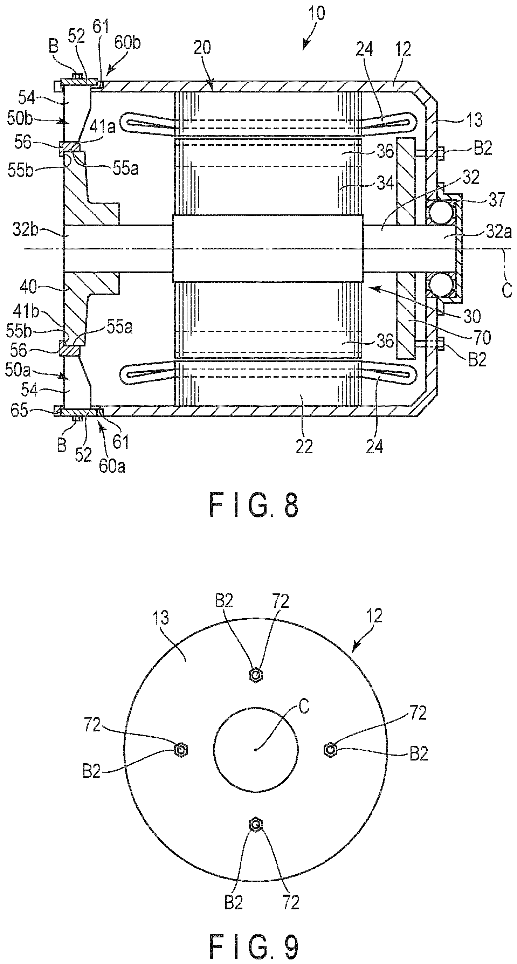

FIG. 8 is a schematic longitudinal sectional view of a rotary electrical machine according to a fourth embodiment. FIG. 9 is a side view showing a closed-end side of the rotary electrical machine according to the fourth embodiment.

As shown in the figures, according to the fourth embodiment, the rotary electrical machine 10 includes an optional pressing member 70 on the non-driving side of the rotor 30. In the present embodiment, a disk-shaped support plate fixed at the end 32a of the rotating shaft 32 on its non-driving side is used as the pressing member 70. The pressing member 70 is provided coaxially with the rotating shaft 32 and opposed to the end plate 13 of the housing 12 with a gap therebetween. In addition, a plurality of, for example, four threaded holes 72 are formed in the end plate 13. These threaded holes 72 are provided at equal intervals in the peripheral direction and opposed to the pressing member 70. The bolt B2 is screwed into the threaded hole 72 from outside the end plate 13, and the distal end of the bolt B2 is pushed into the pressing member 70.

The other configurations of the rotary electrical machine 10 according to the fourth embodiment are the same as those of the rotary electrical machine 10 according to the first embodiment described above.

According to the fourth embodiment having the foregoing configuration, the bolt B2 is pressed on the pressing member 70, with the result that the rotor 30 can be pressed in the axial direction and moved to the driving end side, and the bonding surface (end surface) 41b of the coupling member 40 can be pressed on the second abutting surface 55b of the support members 50a and 50b. Thus, the coupling member 40 and the rotor 30 can be positioned more reliably in the axial direction, and the rotor 30 can be firmly supported and fixed.

Note that the pressing member 70 is not limited to an independent support plate, but a cooling fan attached to the rotating shaft or the rotor core 34 itself can be used as a support member.

### (Fifth Embodiment)

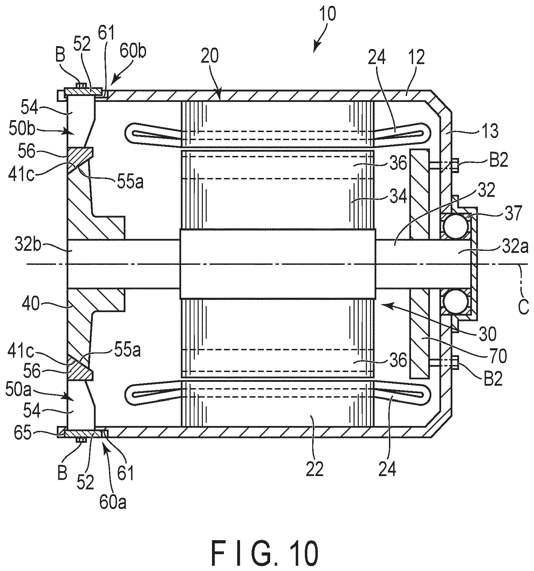

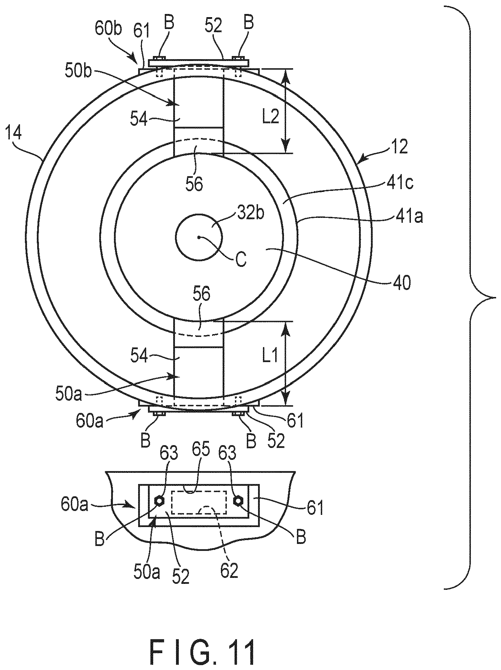

FIG. 10 is a schematic longitudinal section view of a rotary electrical machine according to a fifth embodiment. FIG. 11 is a side view showing an open-end side of the rotary electrical machine according to the fifth embodiment.

As shown in the figures, according to the fifth embodiment, like in the fourth embodiment described above, the rotary electrical machine 10 includes a pressing member 70 on the non-driving side of the rotor 30 and a plurality of bolts (fastening members) B2 screwed into the end plate 13 of the housing 12 and pressed on the pressing member 70.

In the fifth embodiment, furthermore, the outer peripheral surface 41a of the coupling member 40 constitutes an inclined, tapered surface 41c that tapers from the non-driving side toward the driving side. The abutting members 56 of the support members 50a and 50b each have an inclined, tapered abutting surface 55a having curvature corresponding to that of the tapered surface 41c. The second abutting surface is omitted.

In the fifth embodiment, the other configurations of the rotary electrical machine 10 are the same as those of the rotary electrical machine 10 according to the first embodiment described above.

According to the fifth embodiment having the foregoing configuration, the outer peripheral surface 41a of the coupling member 40 and the abutting surface 55a of the abutting member 56 are formed in a tapered shape and these surfaces are brought into contact with each other. Thus, the coupling member 40 can be positioned in the vertical (radial) and axial positions simultaneously. The second abutting surface of each abutting member 56 can be omitted, and the configuration of the support members 50a and 50b can be simplified.

Furthermore, the bolt B2 is pressed on the pressing member 70, with the result that the rotor 30 can be pressed in the axial direction and moved to the driving end side, and the tapered surface 41c of the coupling member 40 can be pressed on the abutting surface 55a of the support members 50a and 50b. Thus, the coupling member 40 and the rotor 30 can be positioned more reliably in the axial and radial directions, and the rotor 30 can be firmly supported and fixed.

Note that in the fifth embodiment, too, the pressing member 70 is not limited to an independent support plate, but a cooling fan attached to the rotating shaft or the rotor core 34 itself can be used as a support member.

### (Sixth Embodiment)

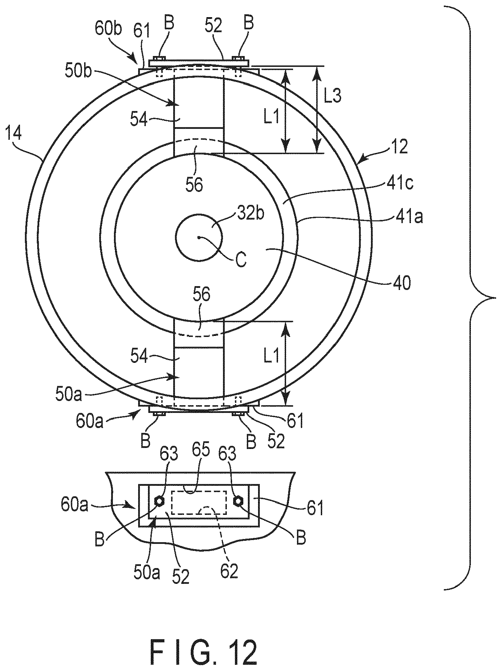

FIG. 12 is a side view showing an open-end side of a rotary electrical machine according to a sixth embodiment.

In the various embodiments described above, the shortest length (predetermined distance) L2 from the seat surface 61 of the upper installation section 60b to the outer peripheral surface 41a of the coupling member 40 (or the bottom of the engaging groove) is shorter than the shortest length (predetermined distance) L1 from the seat surface 61 of the lower installation section 60a to the outer peripheral surface 41a of the coupling member 40 (or the bottom of the engaging groove, or the tapered surface 41c)(L2 < L1), and the support members 50a and 50b are set to a common length, e.g., L1. In contrast, according to the sixth embodiment, the shortest length (predetermined distance) from the seat surface 61 to the outer peripheral surface 41a (or the bottom of the engaging groove, or the tapered surface 41c) of the coupling member 40 in the installation sections 60a and 60b is set to the common length L1. Instead, the length L3 of the upper support member 50b is longer than the length L1 of the lower support member 50a (L3 > L1). In detail, the length L3 from the base plate 52 of the upper support member 50b to the first abutting surface 55a is set to be several millimeters longer than the length L1 from the base plate 52 of the lower support member 50a to the first abutting surface 55a.

Therefore, in the upper support member 50b, a gap (for example, about several millimeters) is caused between the base plate 52 and the seat surface 61 with the first abutting surface 55a abutting on the outer peripheral surface 41a (tapered surface 41c) of the coupling member 40. If the bolt B is tightened in this state, the abutting member 56 of the upper support member 50b presses the coupling member 40 against the abutting member 56 of the lower support member 50b. Thus, the radial position of the coupling member 40 is positioned precisely with reference to the lower support member 50a.

In the sixth embodiment, the other configurations of the rotary electrical machine are the same as those of the rotary electrical machine in the fifth embodiment described above. The sixth embodiment configured as described above can also bring about advantageous effects similar to those of the foregoing embodiments. In addition, according to the sixth embodiment, the design and machining of the housing 12 can be facilitated by sharing the height position of the seat surface of each installation section.

While certain embodiments have been described, these embodiments have been presented by way of example only, and are not intended to limit the scope of the inventions. These novel embodiments may be embodied in a variety of other forms; furthermore, various omissions, substitutions and changes may be made without departing from the spirit of the inventions. The embodiments may be included in the scope and spirit of the inventions and may be included in the inventions recited in the claims and their equivalents. In addition, the structural elements disclosed in the embodiments can appropriately be combined into various inventions. For example, some of the structural elements can be deleted. The structural elements covering different embodiments can appropriately be combined. The number of support members to be provided is not limited to two or three, but four or more support members may be provided when necessary.

## Claims

1. A rotary electrical machine comprising:
a cylindrical housing including a closed end which is closed by an end plate provided with a bearing and is located at one end in an axial direction and an open end which is located at the other end in the axial direction and is connectable to another device;
a rotor comprising a rotating shaft supported rotatably around a center axis line and a rotor core fixed to the rotating shaft, the rotating shaft including one end supported by the bearing, an other end located close to the open end, and a flange portion provided at the other end and connectable to the another device; and
a stator fixed to the housing and placed around the rotor core with a gap therebetween,
wherein the flange portion includes a peripheral surface opposed to an end portion placed alongside the opening end of the housing with a gap in a radial direction of the rotating shaft; and
the housing includes a plurality of installation sections separated from each other in a circumferential direction around the center axis line and formed at the end portion alongside the opening end, and each of the installation sections includes a seat surface formed at the end portion and separated from the peripheral surface of the flange portion at a predetermined distance in the radial direction, a through hole formed at the end portion through the seat surface and opened toward the peripheral surface of the flange portion, and a threaded hole provided in the seat surface close to the through hole.

2. The rotary electrical machine of claim 1, wherein the installation sections are separated from each other by 90 degrees to 180 degrees in the circumferential direction.

3. The rotary electrical machine of claim 2, wherein the housing includes two installation sections separated by 180 degrees in the circumferential direction.

4. The rotary electrical machine of claim 2, wherein the housing includes three installation sections separated by 120 degrees from each other in the circumferential direction.

5. The rotary electrical machine of any one of claims 1 to 4, further comprising a plurality of support members which are installed in the installation sections, respectively to support the rotating shaft through the flange portion,
wherein each of the support members includes a base portion which is opposed to the seat surface of the installation section and screwed to the seat surface by a bolt screwed into the threaded hole, a leg portion which extends from the base portion toward the center axis line and is inserted through the through hole of the installation section, and an abutting portion which is provided at an extended end of the leg portion and is allowed to abut on at least the peripheral surface of the flange portion.

6. The rotary electrical machine of claim 5, wherein a predetermined distance between the seat surface of at least one of the installation sections and the peripheral surface of the flange portion is shorter than a predetermined distance between the seat surface of another installation section and the peripheral surface of the flange portion; and
in the support members, a length from the base portion to the abutting portion is common to a predetermined distance between the seat surface of the other installation section and the peripheral surface of the flange portion.

7. The rotary electrical machine of claim 5, wherein a predetermined distance between the seat surface and the peripheral surface of the flange portion is common to the installation sections; and
a length from the base portion of at least one of the support members to the abutting portion thereof is longer than the predetermined distance, and a length from the base portion of another support member to the abutting portion thereof is common to the predetermined distance.

8. The rotary electrical machine of claim 5, wherein the abutting portion of the support member includes a first abutting surface that is curved in an arc shape abutting on the peripheral surface of the flange portion and a second abutting surface that is orthogonal to the first abutting surface to regulate an axial position of the flange portion.

9. The rotary electrical machine of claim 5, wherein the flange portion includes an annular engaging groove in the peripheral surface; and
the abutting portion of the support member includes a wedge-shaped distal end that is fit into the engaging groove and an arc-shaped distal-end edge that abuts on a bottom of the engaging groove.

10. The rotary electrical machine of claim 5, wherein the peripheral surface of the flange portion constitutes an inclined, tapered surface; and
the abutting portion of the support member is formed in a tapered shape with curvature and inclination corresponding to the tapered surface and has an abutting surface that abuts on the tapered surface.
